# EUROPEAN PATENT SPECIFICATION

(11) **EP 4 133 433 B1**
(45) Date of publication and mention of the grant of the patent: **14.10.2026**
(21) Application number: 21784396.0
(22) Date of filing: 06.04.2021
(51) Int. Cl.: G06T 7/00, G06N 20/00, G09B 19/00, G09B 25/00, G09B 5/06

(54) **SYSTEM AND METHOD TO USE MACHINE LEARNING TO ENSURE PROPER INSTALLATION AND/OR REPAIR BY TECHNICIANS**
SYSTEM UND VERFAHREN ZUR VERWENDUNG VON MASCHINENLERNEN ZUR SICHERSTELLUNG DER KORREKTEN INSTALLATION UND/ODER REPARATUR DURCH TECHNIKER
SYSTÈME ET PROCÉDÉ D'UTILISATION D'APPRENTISSAGE AUTOMATIQUE POUR ASSURER UNE INSTALLATION ET/OU UNE RÉPARATION APPROPRIÉES PAR DES TECHNICIENS

(30) Priority: 10.04.2020 US 202016845364
(43) Date of publication of application: 15.02.2023
(73) Proprietor: Hughes Network Systems, LLC, Germantown, MD 20876 (US)
(72) Inventor: BHATNAGAR, Anurag, Germantown, MD 20876 (US)
(74) Representative: IPS Irsch AG
(86) International application number: PCT/US2021/025901
(87) International publication number: WO 2021/207145

(56) References cited:
- WO-A1-2019/157288
- WO-A1-2019/157288
- US-A1- 2019 180 105
- US-A1- 2019 180 105
- US-B1- 10 332 209

## Description

### BACKGROUND

### Field of the Invention

The present disclosure generally relates to a system and method useful for ensuring proper installation and/or repair work. In particular, the present disclosure relates to a system and method which uses machine learning from photographs taken by a technician to ensure that the installation and/or repair work is performed and documented correctly.

### Background Information

In various industries, technicians are required to move from site to site and perform installation and repair work. For example, in the communications industry, technicians are regularly called to homes to install and/or repair satellite receivers, antennas, grounding connections, and other electronics equipment. The extent of the installation and/or repair can change from household to household.

WO 2019/157288 A1 discloses object inspection and defect detection from mobile cameras and a remote server to update an evaluation algorithm via machine learning. Images are assigned a numerical score.

US 2019/0180105 A1 discloses client-server-based analysis of the progress of a construction site from images with feedback given to the user.

### SUMMARY

It has been discovered that an improved system and method useful for ensuring proper installation and/or repair work is desired. In view of the state of the known technology, one aspect of the present disclosure is to provide a system according to independent claim 1.

Another aspect of the present disclosure is to provide a method according to independent claim 7.

Another aspect of the present disclosure is to provide a mobile device according to independent claim 12.

### BRIEF DESCRIPTION OF THE DRAWINGS

Referring now to the attached drawings which form a part of this original disclosure:
Fig. 1 shows an example embodiment of a verification system for ensuring proper installation and/or repair work in accordance with the present disclosure;
Fig. 2 shows an example embodiment of an installation, repair and/or maintenance method 100 according to the present disclosure;
Fig. 3 shows an example embodiment of a photograph evaluation method which can be performed as part of the installation, repair and/or management method of Fig. 2; and
Fig. 4 shows an example embodiment of a machine learning method which can be performed as part of the installation, repair and/or management method of Fig. 2.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims.

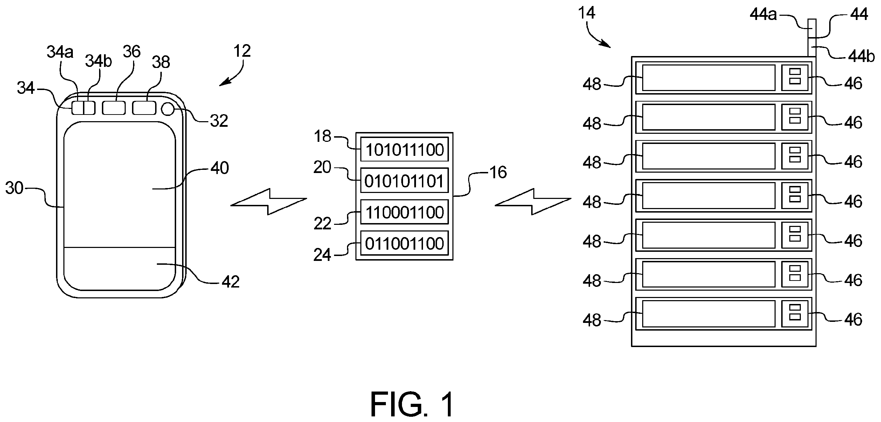

Fig. 1 illustrates an example embodiment of a verification system 10 for ensuring proper installation and/or repair work according to the present disclosure. In the illustrated embodiment, the system 10 includes a mobile device 12 and a central server 14. In use, the mobile device 12 can wirelessly communicate with the central server 14 to transmit data packets 16 including processing instructions 18, one or more photograph 20, one or more work order 22, and/or other types of data 24.

The mobile device 12 can include a user interface 30, a camera 32, a first data transmission device 34, a first processor 36 and a first memory 38. In use, the first processor 36 is configured to execute instructions programmed into and/or stored by the first memory 38. The instructions can be, for example, processing instructions 18 periodically received and/or updated via the data packets 16 transmitted from the central server 14. Once the processing instructions 18 have been stored in the first memory 38, the first processor 36 can then control the user interface 30, the camera 32 and the data transmission device 34 based on the processing instructions 18.

The mobile device 12 can be, for example, a cellular phone, tablet, personal computer or other electronic device. The user interface 30 can include a display screen 40 and an input device 42 such as a touch screen or button pad. The camera 32 can be a standard camera configured to record still images and/or videos. The first data transmission device 34 can include, for example, a transmitter 34a and a receiver 34b configured to send and receive wireless signals.

The transmitter 34a can be any known transmitter capable of sending a wireless signal (e.g., send outgoing electromagnetic waves such as radio waves), for example, by generating a radio frequency alternating current which is applied to an antenna. Likewise, the receiver 34b can be any known receiver capable of receiving a wireless signal (e.g., receiving incoming electromagnetic waves such as radio waves), for example, which extracts information from a radio frequency alternating current which is received by an antenna, converting the radio frequency alternating current into a form useable by the first processor 36 mobile device 12. The transmitter 34a and the receiver 34b can be combined into a single transceiver and/or utilize or include a single antenna or separate antennas.

The central server 14 can include a second data transmission device 44, a second processor 46, and a second memory 48. The second processor 46 is configured to execute control instructions programmed into and/or stored by the second memory 48. The second processor 46 can also be configured to constantly update the processing instructions 18 and transmit the updated processing instructions 18 to the mobile device 12 via the second data transmission device 44, which can include, for example, a transmitter 44a and a receiver 44b configured to send and receive wireless signals.

The transmitter 44a can be any known transmitter capable of sending a wireless signal (e.g., send outgoing electromagnetic waves such as radio waves), for example, by generating a radio frequency alternating current which is applied to an antenna. Likewise, the receiver 44b can be any known receiver capable of receiving a wireless signal (e.g., receiving incoming electromagnetic waves such as radio waves), for example, which extracts information from a radio frequency alternating current which is received by an antenna, converting the radio frequency alternating current into a form useable by the second processor 48 of the central server 14. The transmitter 44a and the receiver 44b can be combined into a single transceiver and/or utilize or include a single antenna or separate antennas.

As discussed herein, the central server 14 transmitting, sending and/or receiving data to or from the mobile device 12, or the mobile device 12 transmitting, sending and/or receiving data to or from the central server 14, can refer to wireless communication between the transmitter 34a and/or the receiver 34b of the first data transmission device 34 and the transmitter 44a and/or the receiver 44b of the second data transmission device 44. It should be understood that the transmitter 34a of the first data transmission device 34 transmits signals/data to the receiver 44b of the second data transmission device 44, and the transmitter 44a of the second data transmission device 44 transmits signals/data to the receiver 34a of the first data transmission device 34.

Various tasks performed according to the methods described herein can be stored as instructions on the first memory 38 and/or the second memory 48. The first processor 36 can execute instructions programmed on the first memory 38, and the second processor 46 can execute instructions programmed on the second memory 48. Those of ordinary skill in the art will recognize that certain steps described herein with respect to one processor/memory combination can be performed by the other processor/memory combination. It should further be understood, however, that dividing the tasks in certain ways as described herein improves various factors such as customer privacy, the processing speed of each processor 36 and 46, and the memory space used/available within each memory 38 and 48.

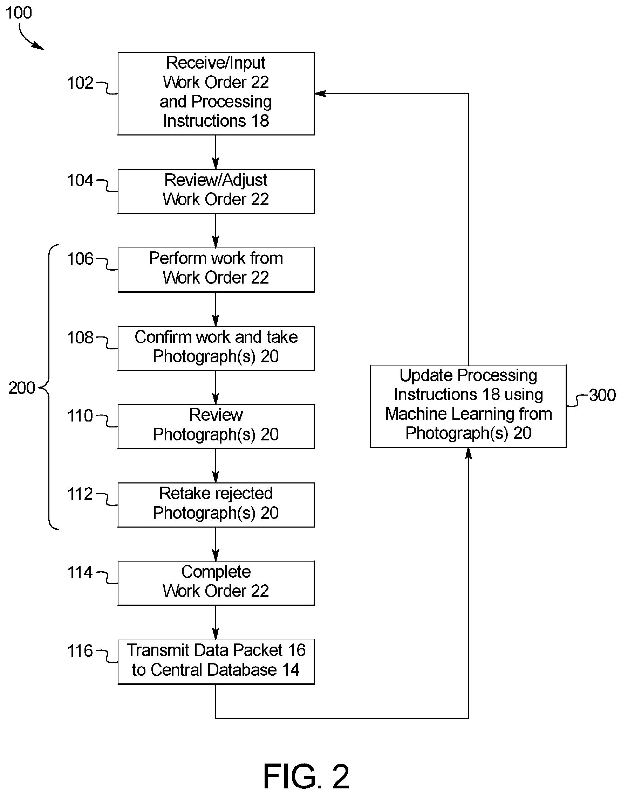

Fig. 2 illustrates an example embodiment of an installation, repair and/or maintenance method 100 according to the present disclosure. Some or all of the steps of method 100 can be stored as instructions on the first memory 38 and/or the second memory 48 and can be executed by the first processor 36 and/or the second processor 46 in accordance with the respective instructions stored on the first memory 38 and/or the second memory 48.

At step 102, a work order 22 is received into the mobile device 12 and/or the central server 14. If the work order 22 is received at the central server 14, the work order 22 can be transmitted from the transmitter 44a of the central server 14 to the receiver 34b of the mobile device 12. In one embodiment, a customer can request an installation or repair via an internet website or call center, and the work order 22 can be logged at the central server 14 before being transferred via a data packet 16 to the mobile device 12 of a particular technician assigned to perform the installation or repair associated with the work order 22. The data packet 16 transmitted to mobile device 12 can also include up-to-date processing instructions 18 to be stored on the first memory 38 and executed by the first processor 36 as the technician completes the work order 22. In an alternate embodiment, the technician can program the work order 22 directly into the mobile device 12 while onsite using the user interface 30 and/or can request updated processing instructions 18 from the central server 14 at any time.

The processing instructions 18 can guide the technician through the work order 22 using the mobile device 12. The processing instructions 18 can include, for example, up-to-date computer code for running an application on the mobile device 12. By receiving the processing instructions 18 in the same data packet 16 containing a current work order 22, the present system 10 can ensure that the technician's mobile device 12 contains up-to-date processing instructions 18 each time a work order 22 is performed.

At step 104, the technician can review and/or adjust the work order 22, which can occur prior to the technician arriving onsite and/or after the technician arrives onsite. The technician can confirm the work order 22 if the work indicated by the work order 22 appears accurate once arriving onsite. The technician can also adjust the work order 22 if the technician arrives onsite to find that the work order 22 is inaccurate or that additional work needs to be done. In an embodiment, the technician's adjustments can be transmitted back to the central server 14 and approved at the central server 14 before the work commences.

At step 106, the technician performs the work in accordance with the work order 22. In one embodiment, the user interface 30 of the mobile device 12 can provide the technician with step-by-step instructions regarding the work to perform work in accordance with the work order 22. Alternatively, the technician can perform the entirety of the work from the work order 22 before confirming that the steps have been completed via the user interface 30 of the mobile device 12.

At step 108, which can be performed in combination with step 106 and/or after the completion of step 106, the technician can be prompted by the user interface 30 to record one or more photograph 20 of the installation and/or repair work using the camera 32. In an embodiment, the user interface 30 can instruct the technician to take one or more photograph 20 as the work order 22 is being completed such that the technician documents each step of the process. In one embodiment, the processing instructions 18 can prevent the user interface 30 from displaying the next step or remainder of the work order 22 unless the technician has recorded an appropriate photograph 20 as instructed. In an alternative embodiment, the technician can complete the entirety of the work order 22 prior to receiving instructions from the user interface 30 as to which one or more photograph 20 needs to be recorded.

At step 110, which can be performed in combination with steps 106 and 108 and/or after the completion of steps 106 and 108, the first processor 36 can review the one or more photograph 20 based on the processing instructions 18 stored by the first memory 38. In reviewing the one or more photograph 20, the first processor 36 can determined whether each one or more photograph 20 can be deemed acceptable in accordance with the updated processing instructions 18 stored by the first memory 38. A photograph 20 can be deemed acceptable, for example, if the photographs meets a predetermined score or grade (e.g., a predetermined numerical value) based on various factors determined by the updated processing instructions 18 stored by the first memory 38.

In an embodiment, the processing instructions 18 stored by the first memory 38 include criteria which each photograph 20 must meet to be deemed acceptable. The criteria can include, for example, the brightness/darkness of a photograph 20, the clarity/blurriness/resolution of a photograph 20, the angle of a photograph 20, the framing of a photograph 20, the detection of certain elements within a photograph 20, and/or other criteria. Based on a combination of these criteria, the first processor 36 can calculate a score or grade for each photograph 20, with each photograph 20 deemed acceptable if a minimum score is met (e.g., achieves a numerical value which meets or exceeds a predetermined minimum threshold value), and deemed unacceptable if the minimum score is not met (e.g., does not achieve a numerical value which meets or exceeds a predetermined minimum threshold value).

In one embodiment, the processing instructions 18 stored by the first memory 38 can cause the first processor 36 to perform a pixel-based comparison for the photograph 20. With a pixel-based comparison, the first processor 36 can use the spectral information for a plurality of individual pixels and assign a grade or score based on some or all of the individual pixels. For example, the first processor 36 can determine spectral information such as the intensity of each pixel and assign a grade or score based on some or all of the pixels meeting a predetermined threshold.

In another embodiment, the processing instructions 18 stored on the first memory 38 can cause the first processor 36 to perform an object-based comparison for the photograph. With an object-based comparison, the first processor 36 can use the spectral information for a localized group of pixels and assign a grade or score based on one or more localized group of pixels. For example, the first processor 36 can determine spectral information such as the intensity of each localized group and assign a grade or score based on some or all of the pixels meeting a predetermined threshold.

In an example embodiment, each pixel or localized group of pixels can be assigned one or more brightness value (Bv) based on an RGB color model (e.g., using one or more RGB value between 0 (dark) and 255 (bright)). For example, the brightness value (Bv) for each pixel can be determined by averaging a plurality of RGB values for each pixel. Alternatively, one or more RGB values can be used as one or more brightness values (Bv). In this example, the first processor 36 can then assign a brightness score or grade (C_{b}) using one or more RGB value and/or one or more brightness value (Bv), for example, by calculating an average score using some or all of the pixels or regions of pixels. The optimal score or grade can be above a certain threshold value, below a certain threshold value, and/or between certain threshold values. For example, an ideal RGB brightness value (Bv) earning a score (C_{b}) of 10 on a 1-10 scale can be between a lower threshold X_{b} and an upper threshold Y_{b}, with increments of Z_{b} determining the overall score (i.e., C_{b} of 10 for X_{b}≤ Bv ≤Y_{b}; C_{b} of 9 for (X_{b}-Z_{b})≤ Bv ≤(Y_{b}+Z_{b}); C_{b} of 8 for (X_{b}-2Z_{b})≤ B_{V} ≤(Y+2Z_{b}); C_{b} of 7 for (X_{b}-3Z_{b})≤ By ≤(Y_{b}+3Z_{b}); etc.). Those of ordinary skill in the art will recognize that this is an example only and that other scoring methods can be used.

In another example embodiment, again using RGB values, the first processor 36 can also assign a clarity or blurriness score (C_{c}) using one or more RGB values and/or one or more brightness value (Bv) for each pixel by finding slow transitions between adjacent pixels or regions of pixels. For example, in certain pictures, it should be expected for a sharp change in RGB and/or brightness between various different components within the picture. If the first processor 36 does not find a predetermined number or percentage of sharp changes between adjacent pixels or regions of pixels, the first processor 36 can determine the picture to be blurry. For example, an ideal clarity can be calculated as earning a score (C_{c}) of 10 on a 1-10 scale based on a predetermined number or percentage of adjacent pixels or regions showing a predetermined threshold difference using RGB values (e.g., a difference of 50, 60, 70, etc. for adjacent pixels on a 0-255 scale). Those of ordinary skill in the art will recognize that this is an example only and that other scoring methods can be used.

In one embodiment, again using RGB values, the first processor 36 can look for expected components within a photograph 20 by comparing the pixels within the photograph 20 taken by the technician to one or more known photographs showing the expected components. In doing so, the first processor 36 can look for expected RGB patterns in the pixels. The components installed by the technician can include certain colors or markers to enable the first processor 36 to locate certain elements. The first processor 36 then uses those colors or markers to determine the presence of the component. If the component is detected, the processor can then determine at least one of (i) brightness (e.g., comparing the RGB/brightness of the expected component's or markers' pixels to a preferred RGB/brightness based on prior photographs); (ii) clarity (e.g., comparing RGB/brightness transitions within the expected component or markers or at the edge of the expected component or markers to expected or preferred RGB/brightness transitions based on prior photographs); (iii) angle (e.g., comparing the shape of the region of pixels showing the expected component or markers to the shape of the region of the component or markers in prior photographs); (iv) framing (e.g., comparing the size of the region of pixels showing the expected component or markers to the size of the region of the component or markers in prior photographs); and/or (v) any other suitable or helpful determination.

In this embodiment, for example, the angle and framing scores (e.g., on a 1-10 scale) can be determined by how close the shape and size of an expected region of pixels matches the shape and size of a region of pixels from photographs of known components. For example, a higher score (e.g., 10 on a 1-10 scale) can be assigned for near perfect matches in shape and size, with lower scores assigned based on the percentage differences in shape and size. The regions of pixels used in this determination can include, for example, the entire expected component, a portion of the expected component, the colors or markers used to recognize the component, and/or any other appropriate region.

In a general example embodiment, a photograph 20 can receive a numerical score (e.g. between 1-10) for one or more of the following factors: (i) brightness; (ii) clarity (e.g. resolution), (iii) angle; (iv) framing (e.g., zoom); and (v) the detection of expected elements. In one embodiment with these five categories, the photograph can be deemed acceptable only if each category meets a minimum score (e.g., if the photograph 20 achieves a minimum score of 8 out of 10 in each of the five categories). In another embodiment, the photograph can be deemed acceptable only if the total sum of the scores for each category meets a minimum score (e.g., if the sum of all scores achieves a minimum score of 40 out of 50). In another embodiment, both the scores for each category and the total sum for all categories must meet a minimum (e.g., each category achieving a minimum score of 8 out of 10 and the total sum of all scores achieving a minimum score of 40 out of 50). Additionally, more important categories can be weighted more heavily than other categories in the scoring process. Those of ordinary skill in the art will further understand that the five categories listed above and the 10-point scoring system are examples only, and that more or less categories and various numerical values can be used to grade each photograph 20. In an embodiment, the scoring system can constantly change as updated processing instructions 18 are received by the mobile device 12 from the central server 14.

**In** an example embodiment, the first processor 36 can calculate a score (S_{P}) for each photograph 20, for example, using the following equation:
${S}_{P} = \frac{\left(W1x C1\right) + \left(W2 x C2\right) + ⋯ \left(Wn x Cn\right)}{\left(number of categories rated\right)}$ (Equation 1)

With Equation 1, C₁, C₂... Cₙ represent individual scores for n number of categories, and W₁, W₂... Wₙ represent weights applied to each rating category. The weights can be any number. In an embodiment, the weights can be numbers between and including zero (0) and (1) (e.g., 0 ≤ W ≤ 1), which will cause the total score (S_{P}) to be calculated on the same scale as the individual categories (e.g., a 1-10 scale in the example above). Thus, in a specific example using the categories discussed above, an example embodiment of Equation 1 can appear as follows:
${S}_{P} = \frac{\left(Wbx Cb\right) + \left(Wc x Cc\right) + \left(Wa x Ca\right) + \left(Wf x Cf\right) + \left(Wd x Cd\right)}{5}$

**In** this specific example, C_{b} is a score for brightness/darkness, C_{c} is a score for clarity/blurriness/resolution, Cₐ is a score for the angle, C_{f} is a score for the framing, and C_{d} is a score based on the detection of expected elements. Additionally, in the above embodiment, W_{b} is a brightness/darkness weight, W_{c} is a clarity/blurriness/resolution weight, Wₐ is an angle weight, W_{f} is a framing weight, and W_{d} is a detected element weight. It should be understood by those of ordinary skill in the art that this is an example only and that more or less ratings/weights can be used.

**In** another example embodiment, the first processor 36 can first attempt to detect one or more expected element within a photograph 20 before assigning a score or grade to the photograph 20. If the expected element is not detected, the first processor 36 can cause the user interface 30 to instruct the technician take an additional photograph, can cause the camera 32 to be adjusted for the additional photograph 20, and/or can provide specific instructions for adjustments to be made to ensure a better photograph 20. In this embodiment, only once one or more expected element is detected within a photograph 20 will the first processor 36 calculate a score (S_{P}) for the photograph 20 (e.g. using Equation 1 above). For example, the first processor 36 can evaluate a photograph known to include an expected element for brightness and clarity be applying Equation 1 as follows:
${S}_{P} = \frac{\left(Wbx Cb\right) + \left(Wc x Cc\right)}{2}$

In this specific example, C_{b} is a score for brightness/darkness, C_{c} is a score for clarity/blurriness/resolution, W_{b} is a brightness/darkness weight, and W_{c} is a clarity/blurriness/resolution weight. It should be understood by those of ordinary skill in the art that this is an example only and that more or less ratings/weights can be used.

At step 112, which can be performed during steps 106, 108 and 110 and/or after the completion of steps 106, 108 and 110, the technician can be prompted by the mobile device 12 to retake one or more photograph 20 taken during step 110. One or more photograph 20 may need to be retaken, for example, if deemed unacceptable for not meeting the minimum score or grade at step 110. One or more photograph 20 may also need to be retaken regardless of the minimum score or grade, for example, if an expected element is not detected. If all photographs 20 meet the minimum score or grade at step 110 and are deemed acceptable, then first processor 36 can skip step 112 and proceed directly from step 110 to step 114.

In an embodiment, the first processor 36 can automatically adjust the camera 32 to fix any deficiencies with a photograph 20 at step 112. For example, if a photograph 20 is deemed to be too dark at step 110 (e.g., if an RGB and/or other brightness value is too low for a region of pixels), the first processor 36 can cause the camera 32 to adjust a flash or alternate lighting for an additional photograph 20. Likewise, if a photograph 20 is deemed to be too blurry at step 110 (e.g., if an expected RGB and/or other brightness transition at a known component is too low), the first processor 36 can adjust the focus of the camera 32 for an additional photograph 20. Likewise, if an expected component within a photograph 20 is deemed to be misshapen or too small/large at step 110 (e.g., if an expected shape or region is misshapen or too small/large), the first processor 36 can adjust the angle or zoom of the camera 32 for an additional photograph 20 to match the expected shape and/or size. Alternatively, the user interface 30 can instruct the technician regarding how to retake an appropriate photograph 20, for example, by instructing the technician to adjust the flash/lighting, adjust the clarity, zoom in, zoom out, adjust the angle of the photograph 20, adjust the visibility of the components in the photograph 20, and/or to make additional or alternative adjustments.

After one or more photograph 20 has been retaken at step 112, the retaken photograph one or more photograph 20 is processed in the same way that the original one or more photograph 20 was processed at step 110. In an embodiment, if the retaken one or more photograph 20 is deemed unacceptable, mobile device 12 can require the technician to continue taking photographs 20 until an acceptable one or more photograph 20 meeting a minimum grade or score has been taken, for example, by preventing the technician from completing the work order 22 at step 114 until the appropriate number of photographs 20 are deemed acceptable. In an alternative embodiment, the technician can be allowed complete the work order 22 at step 114 after a predetermined number of photographs 20 have been taken, even if none of the photographs 20 are deemed acceptable, enabling the technician to complete the work order 22 in situations where it is impossible to take a photograph 20 deemed acceptable according to the processing instructions 18 saved by the memory device 38. When there are no acceptable photographs 20, the first processor 36 can select the photograph 20 with the highest grade or score and save that photograph 20 in place of an acceptable photograph 20.

If multiple photographs 20 have been taken, the first processor 36 can cause one or more of the photographs 20 to be erased from the first memory 38 prior to or at completion of the work order 22 at step 114. For each step of the work order 22, if one photograph 20 is deemed acceptable, then the first processor 36 can cause one or more of the unacceptable photographs 20 to be erased from the first memory 38. If none of the photographs 20 have been deemed acceptable according to the processing instructions 18 saved by the first memory 38, then the first processor 36 can cause the first memory 38 to save only the highest graded or scored of the unacceptable photographs 20 and erase the rest of the photographs 20 from the first memory 38. By deleting photographs 20 in this manner, the first processor 36 can conserve the memory space of the first memory 38, while also decreasing the size of the data packet 16 transmitted to the central server 14.

At step 114, the technician can confirm that the work order 22 has been completed. Upon completion of the work order 22, the first processor 36 can create the data packet 16 to include the one or more photograph 20 deemed acceptable or best and/or other data 24 associated with the work order 22 such as notes from the technician and/or the scores or grades of the one or more photograph 20.

At step 116, the first processor 36 can cause the first data transmission device 34 to transmit the data packet 16 to the second transmission device 44 of the central server 14. For example, the first processor 36 can cause the transmitter 34a of the first data transmission device 34 to convert the data packet 16 into electromagnetic waves which are then transmitted to the receiver 44b of the second transmission device 44, which can convert the electromagnetic waves into useable data by the second processor 46 of the central server 14.

It should be understood that any of the steps of method 100 performed by the first processor 36 can also be performed by the second processor 46, for example, by placing the mobile device 12 in real-time wireless communication with the central server 14 while the technician performs the work order 22 during the method 100.

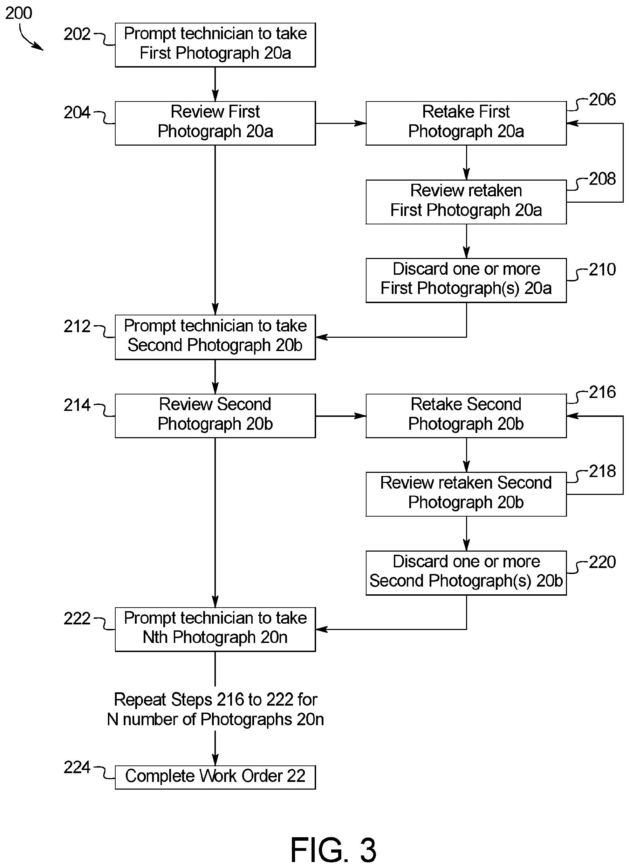

Fig. 3 illustrates an example embodiment of a method 200 which can be executed at one or more of steps 106, 108, 110 and 112 of method 100. Some or all of the steps of the method 200 can be stored as instructions on the first memory 38 and can be executed by the first processor 36 in accordance with the instructions stored on the first memory 38. Alternatively, certain steps can also be executed by the second processor 46 in accordance with instructions stored on the second memory 48.

Step 202 can begin after the technician has completed a first step 22a of the work order 22 or after the technician has completed the entirety of the work order 22. At step 202, the technician is prompted by the user interface 30 of the mobile device 12 to take a first photograph 20a of the installation and/or repair performed at the first step 22a of the work order 22. For example, if the first step 22a of the work order 22 involves connecting two components, the user interface 30 can instruct the technician to take the first photograph 20a of the connection between the two components. Likewise, if the first step 22a of the work order 22 involves installation of a satellite receiver, the user interface 30 can instruct the technician to take the first photograph 20a of the satellite receiver.

At step 204, the first processor 36 of the mobile device 12 can process the first photograph 20a according to the most recent processing instructions 18 stored by the first memory 38. The first processor 36 can process the first photograph 20a for example, according to one or more of the scoring or grading systems discussed herein with respect to step 110 of method 100. It should be understood, however, that the scoring or grading systems discussed herein with respect to step 110 of method 100 are examples only and that other scoring or grading systems can also be used to determine acceptability or unacceptability of a photograph 20.

If the first photograph 20a is determined to be acceptable at step 204, the method 200 can proceed to step 212, where the technician can either complete a second step 22b of the work order 22 and take a second photograph 20b, or can take the second photograph 20b if the entirety of the work order 22 has already been completed.

If the first photograph 20a is determined to be unacceptable at step 204, the method 200 can proceed to step 206, where the user interface 30 of the mobile device 12 can prompt the technician to retake the first photograph 20a. The user interface 30 can also prompt the technician with specific instructions which explain why the first photograph 20a was deemed unacceptable at step 204 (e.g., whether an expected element was not detected within the first photograph 20a and/or which category the first photograph 20a scored too low in). For example, the first photograph 20a may have been deemed unacceptable due to poor lighting, clarity, framing, zoom, angles, the failure to detect a particular component expected to be in the photograph, and/or other reasons. By prompting the technician with specific instructions regarding the deficiencies via the user interface 30, the mobile device 12 enables the technician to correct the deficiencies when retaking the first photograph 20a. In various embodiments, the user interface 30 can instruct the technician regarding how to retake an appropriate photograph, for example, by instructing the technician to adjust the flash/lighting, adjust the clarity, zoom in, zoom out, adjust the angle of the photograph, adjust the components taken in the photograph, and/or make additional or alternative adjustments.

In an embodiment, the first processor 36 can automatically adjust the camera 32 to fix some or all of the deficiencies with a first photograph 20a at step 206. For example, if the first photograph 20a is deemed to be too dark at step 204 (e.g., if an RGB and/or other brightness value is too low for a region of pixels), the first processor 36 can automatically cause the camera 32 to adjust a flash or alternate lighting for the retaken first photograph 20a. Likewise, if the first photograph 20a is deemed to be too blurry at step 204 (e.g., if an expected RGB and/or other brightness transition at a known component is too low), the first processor 36 can automatically adjust the focus of the camera 32 for the retaken first photograph 20a. Likewise, if an expected component within a photograph 20 is deemed to be misshapen or too small/large at step 110 (e.g., if an expected shape or region is misshapen or too small/large), the first processor 36 can adjust the angle or zoom of the camera 32 for an additional photograph 20 to match the expected shape and/or size. Alternatively, the user interface 30 can instruct the technician regarding how to retake an appropriate first photograph 20a, for example, by instructing the technician to adjust the flash/lighting, adjust the clarity, zoom in, zoom out, adjust the angle of the first photograph 20a, adjust the visibility of the components in the first photograph 20a, and/or to make additional or alternative adjustments.

At step 208, the first processor 36 of the mobile device 12 can process the retaken first photograph 20a in the same way that the original first photograph 20a was processed at step 204. The first processor 36 can process the retaken first photograph 20a, for example, according to one or more of the scoring or grading systems discussed herein with respect to step 110 of method 100. It should be understood, however, that the scoring or grading systems discussed herein with respect to step 110 of method 100 are examples only and that other scoring or grading systems can also be used to determine acceptability or unacceptability of a photograph 20.

If the retaken first photograph 20a is determined to be unacceptable at step 208, the method 200 returns to step 206, where the user interface 30 of mobile device 12 can prompt the technician to again retake the first photograph 20a. The method can then continue alternating between steps 206 and 208 until the technician takes an acceptable first photograph 20a or overrides the method 200 to move on to step 210.

Once a retaken first photograph 20a is deemed acceptable at step 208, the method can proceed to step 210, where some or all of the first photographs 20a taken between steps 202, 204, 206 and 208 can be deleted from the first memory 38, leaving only the acceptable first photograph 20a to be saved in the first memory 38. By purging the first memory 38 in this manner, more storage space is available for additional photographs 20 and processing by the first processor 36. If none of the first photographs 20a have been deemed acceptable according to the processing instructions 18 saved by the first memory 38, then the first processor 36 can cause the first memory 38 to save only the highest graded or scored of the unacceptable first photographs 20a and erase the rest of the first photographs 20a from the first memory 38. In an alternative embodiment, the technician can override the scoring system and/or select what the technician believes to be the best of the taken first photographs 20a to be saved, with the rest of the taken first photographs 20a to be discarded. In an embodiment, the processing instructions 18 can prevent the technician from moving on to step 212 unless at least one first photograph 20a is saved.

At step 212, the technician is prompted by the user interface 30 of the mobile device 12 to take a second photograph 20b of the installation and/or repair performed at a second step 22b of the work order 22. Step 212 can begin after the technician has completed the second step 22b of the work order 22 or after the technician has completed the entirety of the work order 22. For example, if the second step 22b of the work order 22 involves connecting two components, the user interface 30 can instruct the technician to take the second photograph 20b of the connection between the two components. Likewise, if the second step 22b of the work order 22 involves installation of a satellite receiver, the user interface 30 can instruct the technician to take the second photograph 20b of the satellite receiver. In most embodiments, the second step 22b will be different from the first step 22a.

At step 214, the first processor 36 of the mobile device 12 can process the second photograph 20b according to the most recent processing instructions 18 stored by the first memory 38. The first processor 36 can process the second photograph 20b for example, according to one or more of the scoring or grading systems discussed herein with respect to step 110 of method 100. It should be understood, however, that the scoring or grading systems discussed herein with respect to step 110 of method 100 are examples only and that other scoring or grading systems can also be used to determine acceptability or unacceptability of a photograph 20.

If the second photograph 20b is determined to be acceptable at step 214, the method 200 can proceed to step 222, where the technician can either complete an Nth (e.g., a third, fourth, fifth, etc.) step 22n of the work order 22 and take an Nth (e.g., a third, fourth, fifth, etc.) photograph 20n, or can take the Nth photograph 20n if the entirety of the work order 22 has already been completed.

If the second photograph 20b is determined to be unacceptable at step 214, the method 200 can proceed to step 216, where the user interface 30 of the mobile device 12 can prompt the technician to retake the second photograph 20b. The user interface 30 can also prompt the technician with specific instructions which explain why the second photograph 20b was deemed unacceptable at step 214 (e.g., whether an expected element was not detected within the second photograph 20b and/or which category the second photograph 20b scored too low in). For example, the second photograph 20b may have been deemed unacceptable due to poor lighting, clarity, framing, zoom, angles, the failure to detect a particular component expected to be in the photograph, and/or other reasons. By prompting the technician with specific instructions regarding the deficiencies via the user interface 30, the mobile device 12 enables the technician to correct the deficiencies when retaking the second photograph 20b. In various embodiments, the user interface 30 can instruct the technician regarding how to retake an appropriate photograph, for example, by instructing the technician to adjust the flash/lighting, adjust the clarity, zoom in, zoom out, adjust the angle of the photograph, adjust the components taken in the photograph, and/or make additional or alternative adjustments.

In one embodiment, the first processor 36 can automatically adjust the camera 32 to fix some or all of the deficiencies with a second photograph 20b at step 216. For example, if the second photograph 20b is deemed to be too dark at step 214 (e.g., if an RGB and/or other brightness value is too low for a region of pixels), the first processor 36 can automatically cause the camera 32 to adjust a flash or alternate lighting for the retaken second photograph 20b. Likewise, if the second photograph 20b is deemed to be too blurry at step 214 (e.g., if an expected RGB and/or other brightness transition at a known component is too low), the second photograph 20b can automatically adjust the focus of the camera 32 for the retaken second photograph 20b. Likewise, if an expected component within a photograph 20 is deemed to be misshapen or too small/large at step 110 (e.g., if an expected shape or region is misshapen or too small/large), the first processor 36 can adjust the angle or zoom of the camera 32 for an additional photograph 20 to match the expected shape and/or size. Alternatively, the user interface 30 can instruct the technician regarding how to retake an appropriate second photograph 20b, for example, by instructing the technician to adjust the flash/lighting, adjust the clarity, zoom in, zoom out, adjust the angle of the second photograph 20b, adjust the visibility of the components in the second photograph 20b, and/or to make additional or alternative adjustments.

At step 218, the first processor 36 of the mobile device 12 can process the retaken second photograph 20b in the same way that the original second photograph 20b was processed at step 214. The first processor 36 can process the retaken second photograph 20b, for example, according to one or more of the scoring or grading systems discussed herein with respect to step 110 of method 100. It should be understood, however, that the scoring or grading systems discussed herein with respect to step 110 of method 100 are examples only and that other scoring or grading systems can also be used to determine acceptability or unacceptability of a photograph 20.

If the retaken second photograph 20b is determined to be unacceptable at step 208, the method 200 returns to step 216, where the user interface 30 of mobile device 12 can prompt the technician to again retake the second photograph 20b. The method can then continue alternating between steps 216 and 218 until the technician takes an acceptable second photograph 20b or overrides the method 200 to move on to step 220.

Once a retaken second photograph 20b is deemed acceptable at step 218, the method can proceed to step 220, where some or all of the second photographs 20b taken between steps 212, 214, 216 and 218 can be deleted from the first memory 38, leaving only the acceptable second photograph 20b to be saved in first memory 38. By purging the first memory 38 in this manner, more storage space is available for additional photographs 20 and processing by the first processor 36. If none of the second photographs 20b have been deemed acceptable according to the processing instructions 18 saved by the first memory 38, then the first processor 36 can cause the first memory 38 to save only the highest graded or scored of the unacceptable second photographs 20b and erase the rest of the second photographs 20b from the first memory 38. In an alternative embodiment, the technician can override the scoring system and/or select what the technician believes to be the best of the taken second photographs 20b to be saved, with the rest of the taken second photographs 20b to be discarded. In an embodiment, the processing instructions 18 can prevent the technician from moving on to step 222 unless at least one second photograph 20b is saved.

At step 222, the technician is prompted by the user interface 30 of the mobile device 12 to take an Nth (e.g., a third, fourth, fifth, etc.) photograph 20n of the installation and/or repair performed at an Nth step 22n of the work order 22. Step 222 can begin after the technician has completed each Nth step 22n of the work order 22 or after the technician has completed the entirety of the work order 22. Step 222 can be repeated for as many steps and/or photographs 20n are required for the technician to complete the work order 22. The first processor 36 can then process each Nth photograph 20n in the same way that the first photograph 20a and second photograph 20b have been processed.

At step 114, the technician's mobile device 12 should have a photograph 20a, 20b... 20n saved for each step 22a, 22b... 22n of work order 22. At this point, the technician can confirm that the work order 22 has been completed. Upon completion of the work order 22, the first processor 36 can create the data packet 16 to include each photograph 20a, 20b... 20n deemed acceptable or best for each step 22a, 22b... 22n, notes from the technician with respect to each step and/or photograph, and/or other data 24 associated with the work order 22, which can then be transmitted to central server 14. For example, the first processor 36 can cause the transmitter 34a of the first data transmission device 34 to convert the data packet 16 into electromagnetic waves which are then transmitted to the receiver 44b of the second transmission device 44, which can convert the electromagnetic waves into useable data by the second processor 46 of the central server 14.

It should be understood that any of the steps of method 200 performed by first processor 36 can also be performed by the second processor 46, for example, by placing the mobile device 12 in real-time wireless communication with central server 14 while the technician performs the work order 22 during method 200.

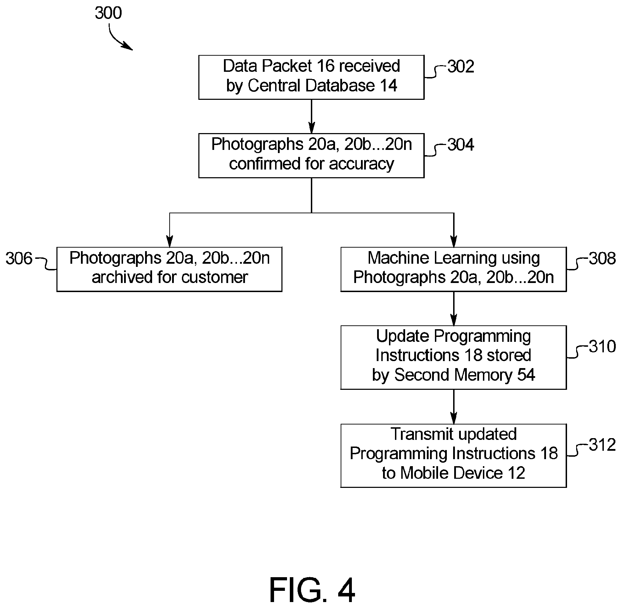

Fig. 4 illustrates an example embodiment of a method 300 which can be executed at the central server 14 after the technician completes the work order 22 at step 114 of method 100 and/or method 200. Some or all of the steps of the method 300 can be stored as control instructions on the second memory 48 and can be executed by the second processor 46 in accordance with the instructions stored on the second memory 48. Alternatively, certain steps can also be executed by the first processor 36 in accordance with the instructions stored on the first memory 38.

At step 302, the receiver 44b of the second data transmission device 44 of the central server 14 receives a data packet 16 from the transmitter 34a of the first data transmission device 34 of the mobile device 12. The data packet 16 can include, for example, the work order 22 completed by the technician using methods 100 and/or 200, the photographs 20a, 20b... 20n taken by the technician during the methods 100 and/or 200, notes taken by the technician related to the work order 22 and/or the photographs 20a, 20b... 20n, and/or other data 24 associated with the work order 22. In an embodiment, the receiver 44b can receive the data packet 16 in the form of electromagnetic waves received by an antenna, which the receiver 44b can then convert into useable data by the second processor 46 of the central server 14.

At step 304, each of the photographs 20a, 20b... 20n from the data packet 16 can be processed by the second processor 46 according to control instructions stored by the second memory 48 (e.g., similar to the processing using the processing instructions 18 discussed herein). In an embodiment, the second processor 46 can process each of the photographs 20a, 20b... 20n, for example, according to one or more of the scoring or grading systems discussed herein with respect to step 110 of method 100. It should be understood, however, that the scoring or grading systems discussed herein with respect to step 110 of method 100 are examples only and that other scoring or grading systems can also be used to determine acceptability or unacceptability of a photograph 20. Alternatively, the second processor 46 can process each of the photographs 20a, 20b... 20n according to stricter criteria than used by the first processor 36 in preparation to use only the most accurate (e.g. highest scoring or graded) photographs in the machine learning step 308. For example, if a photograph 20 is deemed acceptable with a score of 8 out of 10 in each category and/or an overall score of 40 out of 50 at the example of step 110, the photograph 20 may still only be deemed acceptable for transfer to step 308 if the photograph 20 scores 9 out of 10 in each category and/or an overall score of 45 out of 50 at step 304. The reason for this increased baseline, for example, may be due to only allowing only the best photographs to be used at the machine learning portion of method 300.

At step 306, the second memory 48 stores some or all of the photographs 20a, 20b... 20n, along with notes taken by the technician and/or specific details associated with work order 22. The photographs 20a, 20b... 20n can then be used, for example, in response to follow-up calls or complaints from the same customer who requested the work order 22, to audit the quality of the work performed by the technician, to train future technicians, and/or for any other business reason. For this reason, the second memory 48 can save all of the photographs 20a, 20b... 20n regardless of a score or grade, since the purpose of storing the photographs 20a, 20b... 20n at step 306 is to archive the photographs for later use by an individual. In this respect, step 306 can use an alternative memory source besides the second memory 48 to store the photographs 20a, 20b... 20n, along with notes taken by the technician and/or specific details associated with work order 22, which will maximize the memory space available by second memory 48 and possibly improve the processing speed of second processor 46 for steps 302, 304, 308, 310 and/or 312.

At step 308, the second processor 46 can improve methods 100 and/or 200 for future use by a technician by using some or all of the photographs 20a, 20b... 20n in a machine learning process. In an embodiment, only certain photographs 20a, 20b... 20n that meet certain criteria are used in the machine learning process of step 308. The criteria can include, for example, the brightness/darkness of each photograph, the clarity/blurriness/resolution of each photograph, the angle of each photograph, the framing of each photograph, the detection of certain elements within each photograph, and/or other criteria. Based on a combination of these criteria, the second processor 38 can calculate a score or grade for each photograph 20a, 20b... 20n, with each photograph 20a, 20b... 20n deemed acceptable if a minimum score is met (e.g., achieves a numerical value which meets or exceeds a predetermined minimum threshold value), and deemed unacceptable if the minimum score is not met (e.g., does not achieve a numerical value which meets or exceeds a predetermined minimum threshold value).

As discussed above, in a general example embodiment, a photograph 20a, 20b...20n can receive a numerical score between 1-10 for one or more of the following factors: (i) brightness; (ii) clarity (e.g. resolution), (iii) angle; (iv) framing (e.g., zoom); and (v) the detection of expected elements. In one embodiment, the grade or score for a photograph to be deemed acceptable at step 304 can be the same grade or score for a photograph to be deemed acceptable at step 110 discussed above. Alternatively, step 308 may only use photographs 20a, 20b... 20n meeting stricter criteria than used at step 110, with the purpose of only using the highest quality and/or most accurate photographs 20 with machine learning to improve the processing instructions 18.

At step 308, the second processor 46 uses one or more of the photographs 20a, 20b... 20n in a machine learning process to improve and update the processing instructions 18 used by the mobile device 12 onsite during the completion of work orders 22. As understood by those of ordinary skill in the art, machine learning processes uses patterns in photographs to build an algorithm (e.g. mathematical model) to enable a computer program to recognize similar photographs. As a greater number of photographs 20 are used in the training portion of the machine learning process, the resulting algorithm (e.g. mathematical model) becomes more accurate. Thus, by continuously training in real-time with new photographs 20 taken by technicians onsite during the completion of work orders, the algorithm used by the processing instructions 18 can be continuously improved. Thus, at step 308, the second processor 46 uses one or more of the photographs 20a, 20b... 20n to improve the algorithm used to score or grade future photographs 20 taken onsite by technicians. In an embodiment, one or more neural networks can be used to perform step 308.

At step 310, the second processor 46 uses the updated algorithm from the machine learning performed at step 308 to improve and update the processing instructions 18 stored by the second memory 48. By continuously performing the machine learning at step 308 and updating the processing instructions 18 at step 310, the processing performed on one or more photograph 20 using a mobile device 12 while the technician is onsite is continuously improved.

At step 312, the updated processing instructions 18 can be transmitted to one or more mobile devices 12 used by onsite technicians, for example, by transmitting electromagnetic waves from the transmitter 44a of the second transmission device 44 to the receiver 34b of the first transmission device 34, wherein the receiver 34b can then convert the electromagnetic waves into useable data by the first processor 36 of the mobile device 12. The processing instructions 18 can be transmitted to the mobile devices 12, for example, either periodically or on demand by technicians. As discussed herein, the processing instructions 18 can also be sent to mobile devices 12 each time a technician receives a new work order 22, for example, by transmitting a data packet 16 including both the work order 22 and the processing instructions 18 from the central server 14 to the mobile device 12. By transmitting the updated processing instructions 18 in a data packet 16 with the work order 22, the present methods can ensure that the onsite technicians are always using the most accurate processing instructions 18 when completing work orders 22 and taking photographs 20.

The embodiments described herein provide improved systems and methods for ensuring proper installation and/or repair work. The improved systems and methods use machine learning from photographs taken by an onsite technician to ensure that installation and/or repair work is performed and documented correctly. It should be understood that various changes and modifications to the system and method described herein will be apparent to those skilled in the art and can be made without diminishing the intended advantages.

### GENERAL INTERPRETATION OF TERMS

**In** understanding the scope of the present invention, the term "comprising" and its derivatives, as used herein, are intended to be open ended terms that specify the presence of the stated features, elements, components, groups, and/or steps, but do not exclude the presence of other unstated features, elements, components, groups, integers and/or steps. The foregoing also applies to words having similar meanings such as the terms, "including", "having" and their derivatives. Also, the terms "part," "section," or "element" when used in the singular can have the dual meaning of a single part or a plurality of parts. Accordingly, these terms, as utilized to describe the present invention should be interpreted relative to a connecting device.

The term "configured" as used herein to describe a component, section or part of a device includes hardware and/or software that is constructed and/or programmed to carry out the desired function.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such features. Thus, the foregoing descriptions of the embodiments according to the present invention are provided for illustration only, and not for the purpose of limiting the invention as defined by the appended claims.

## Claims

1. A system for evaluating installation or repair work, the system comprising:
a mobile device (12) including a camera (32), a first processor (36), and a first memory (38), the first processor (36) configured to execute processing instructions (18) stored by the first memory (38), the processing instructions (18) including an algorithm to evaluate photographs (20) recorded by the camera; and
a central server (14) configured to wirelessly communicate with the mobile device (12), the central server (14) including a second processor (46) and a second memory (48), the second processor (46) configured to execute control instructions stored on the second memory (48) to cause the central server (14) to:
- receive at least one photograph (20) recorded by the camera (32) of the mobile device (12) after completion of a first work order (22) for the installation or repair work and evaluated by the first processor (36) of the mobile device (12) for one or more colors or markers that identify one or more expected components involved in the installation or repair work of the first work order;
- perform machine learning using pattern recognition of the one or more colors or markers that identify one or more expected components involved in the installation or repair work in the at least one photograph (20) to improve the algorithm used to evaluate the at least one photograph (20) by the first processor (36) of the mobile device (12);
- update the processing instructions using the improved algorithm; and
- transmit the updated processing instructions (18) to the mobile device (12) to enable evaluation of at least one subsequent photograph (20).

2. The system of Claim 1, wherein the processing instructions (18) are configured to further cause the first processor (36) to evaluate the at least one photograph (20) based on at least one of the following properties of the at least one photograph (20): brightness; clarity, angle from which the at least one photograph (20) is taken and framing.

3. The system of Claim 1, wherein the processing instructions (18) are configured to cause the first processor (36) to evaluate the at least one photograph (20) by calculating a numerical score for the at least one photograph (20).

4. The system of Claim 3, wherein the processing instructions (18) are configured to cause the first processor (36) to assign at least one weight to at least one of a plurality of categories when calculating the numerical score, wherein the plurality of categories comprise brightness, clarity, angle from which the at least one photograph (20) is taken and framing.

5. The system of Claim 1, wherein the central server (14) is configured to transmit the updated processing instructions (18) to the mobile device (12) as part of a data packet (16) used to transmit a work order regarding subsequent installation or repair work.

6. The system of Claim 1, wherein the control instructions are configured to cause the second processor (46) to evaluate the at least one photograph (20) for acceptability, and only perform machine learning using the at least one photograph (20) when the at least one photograph (20) is determined to be acceptable, wherein the at least one photograph (20) is acceptable if a minimum score is met.

7. A method for evaluating installation or repair work, the method comprising:
- recording at least one first photograph (20) by a technician on a mobile device after completion of a first work order (22) for the installation or repair work;
- evaluating the at least one first photograph (20) after completion of the first work order (22) for one or more colors or markers that identify one or more expected components involved in the work order (22) based on processing instructions (18) stored by the mobile device;
- transmitting the at least one first photograph (20) to a central server (14) configured to perform machine learning using pattern recognition of the one or more colors or markers that identify one or more expected components involved in the first work order (22) in the at least one first photograph (20);
- receiving updated processing instructions (18) based on the machine learning performed at the central server (14);
- recording at least one second photograph (20) on the mobile device (12) by the technician after completion of a second work order (22);
- and evaluating the at least one second photograph (20) based on the updated processing instructions.

8. The method of Claim 7, wherein the evaluating the at least one first photograph (20) includes evaluating the at least one first photograph (20) based on at least one of the following properties of the at least one photograph (20): brightness, clarity, angle from which the at least one photograph (20) is taken and framing.

9. The method of Claim 7, wherein the evaluating the at least one first photograph (20) includes evaluating the at least one first photograph (20) by calculating a numerical score for the at least one first photograph (20).

10. The method of Claim 9, further including assigning at least one weight to at least one of a plurality of categories when calculating the numerical score or further including retaking the at least one first photograph (20) if the numerical score is below a predetermined threshold.

11. The method of Claim 7, wherein the receiving updated processing instructions (18) includes receiving the updated processing instructions (18) as part of a data packet (16) including the second work order (22).

12. A mobile device (12) for ensuring proper evaluating installation or repair work according to a work order (22), the mobile device comprising:
a user interface (30) configured to be operated by a technician during completion of the work order (22);
a camera (32) configured to record at least one first photograph (20) and at least one second photograph (22) of at least one task completed by the technician in accordance with the work order (22), the camera (32) in operable communication with the user interface (30);
a memory (38) configured to store processing instructions (18) to evaluate photographs (20) recorded by the camera (32); and
a processor (36) configured to execute the processing instructions (18) stored on the memory (38) to:
- determine the at least one first photograph (20) to be acceptable to document the at least one task completed by the technician in accordance with the work order (22), the at least one first photograph (20) determined to be acceptable based on detection of one or more colors or markers that identify one or more expected components related to the at least one task after completion of the at least one task in accordance with the work order (22);
- when the at least one first photograph (22) is determined to be not acceptable due to the one or more expected components not being detected, cause the user interface (30) to display instructions to take the at least one second photograph (20) and delete the at least one first photograph (20) from the memory (38) prior to transmission to a central server (14); and
- when the at least one second photograph (20) is determined to be acceptable, cause the transmission of the at least one second photograph (20) to the central server (14).

13. The mobile device of Claim 12, wherein the processor (36) is configured to assign a numerical score to the at least one photograph (20) to determine acceptability, the processor (36) determining the at least one photograph (20) to be acceptable when the numerical score is above a predetermined threshold.

14. The mobile device of Claim 12, wherein the processor (36) is configured to detect at least one expected element within the photograph (20), the processor (36) determining the at least one photograph (20) to be unacceptable when the at least one expected element is not detected or wherein the processor (36) is configured to automatically instruct the technician to adjust the camera (32) for taking an additional photograph (20) to make sure that the additional photograph (20) is acceptable, upon determining the at least one initial photograph (20) to be unacceptable wherein the at least one photograph (20) is unacceptable when the at least one expected element is not detected and acceptable when the at least one expected element is detected.

15. The mobile device of Claim 12, wherein the processor (36) is configured to further determine a brightness of the at least one photograph (20) to determine acceptability, the processor (36) determining the at least one photograph (20) to be unacceptable when the brightness is below a predetermined threshold or wherein the processor (36) is configured to determine a clarity of the at least one photograph (20) to determine acceptability, the processor (36) determining the at least one photograph (20) to be unacceptable when the clarity is below a predetermined threshold

## Patentansprüche

1. System zum Bewerten von Installations- oder Reparaturarbeiten,
wobei das System umfasst:
eine mobile Vorrichtung (12), die eine Kamera (32), einen ersten Prozessor (36) und einen ersten Speicher (38) beinhaltet, wobei der erste Prozessor (36) konfiguriert ist, um Verarbeitungsanweisungen (18) auszuführen, die durch den ersten Speicher (38) gespeichert sind, wobei die Verarbeitungsanweisungen (18) einen Algorithmus zum Bewerten von Fotografien (20) beinhalten, die durch die Kamera aufgezeichnet sind; und
einen zentralen Server (14), der konfiguriert ist, um drahtlos mit der mobilen Vorrichtung (12) zu kommunizieren, wobei der zentrale Server (14) einen zweiten Prozessor (46) und einen zweiten Speicher (48) beinhaltet, wobei der zweite Prozessor (46) konfiguriert ist, um Steueranweisungen auszuführen, die auf dem zweiten Speicher (48) gespeichert sind, um den zentralen Server (14) zu Folgendem zu veranlassen:
- Empfangen mindestens einer Fotografie (20), die durch die Kamera (32) der mobilen Vorrichtung (12) nach Abschluss eines ersten Arbeitsauftrags (22) für die Installations- oder Reparaturarbeiten aufgezeichnet und durch den ersten Prozessor (36) der mobilen Vorrichtung (12) für eine oder mehrere Farben oder Markierungen bewertet wird, die eine oder mehrere erwartete Komponenten identifizieren, die an den Installations- oder Reparaturarbeiten des ersten Arbeitsauftrags beteiligt sind;
- Durchführen von maschinellem Lernen unter Verwendung von Mustererkennung der einen oder mehreren Farben oder Markierungen, die eine oder mehrere erwartete Komponenten identifizieren, die an den Installations- oder Reparaturarbeiten in der mindestens einen Fotografie (20) beteiligt sind, um den Algorithmus zu verbessern, der zum Bewerten der mindestens einen Fotografie (20) durch den ersten Prozessor (36) der mobilen Vorrichtung (12) verwendet wird;
- Aktualisieren der Verarbeitungsanweisungen unter Verwendung des verbesserten Algorithmus; und
- Übertragen der aktualisierten Verarbeitungsanweisungen (18) an die mobile Vorrichtung (12), um die Bewertung mindestens einer nachfolgenden Fotografie (20) zu ermöglichen.

2. System nach Anspruch 1, wobei die Verarbeitungsanweisungen (18) konfiguriert sind, um ferner den ersten Prozessor (36) zu veranlassen, die mindestens eine Fotografie (20) basierend auf mindestens einer der folgenden Eigenschaften der mindestens einen Fotografie (20) zu bewerten: Helligkeit; Klarheit, Winkel, aus dem die mindestens eine Fotografie (20) aufgenommen wird, und Framing.

3. System nach Anspruch 1, wobei die Verarbeitungsanweisungen (18) konfiguriert sind, um den ersten Prozessor (36) zu veranlassen, die mindestens eine Fotografie (20) durch Berechnen einer numerischen Punktzahl für die mindestens eine Fotografie (20) zu bewerten.

4. System nach Anspruch 1, wobei die Verarbeitungsanweisungen (18) konfiguriert sind, um den ersten Prozessor (36) zu veranlassen, mindestens einer von einer Vielzahl von Kategorien mindestens ein Gewicht zuzuweisen, wenn die numerische Punktzahl berechnet wird, wobei die Vielzahl von Kategorien Helligkeit, Klarheit, Winkel, aus dem die mindestens eine Fotografie (20) aufgenommen wird, und Framing umfasst.

5. System nach Anspruch 1, wobei der zentrale Server (14) konfiguriert ist, um die aktualisierten Verarbeitungsanweisungen (18) als Teil eines Datenpakets (16), das verwendet wird, um einen Arbeitsauftrag bezüglich nachfolgender Installations- oder Reparaturarbeiten zu übertragen, an die mobile Vorrichtung (12) zu übertragen.

6. System nach Anspruch 1, wobei die Steueranweisungen konfiguriert sind, um den zweiten Prozessor (46) zu veranlassen, die mindestens eine Fotografie (20) auf Annehmbarkeit zu bewerten und nur maschinelles Lernen unter Verwendung der mindestens einen Fotografie (20) durchzuführen, wenn bestimmt wird, dass die mindestens eine Fotografie (20) annehmbar ist, wobei die mindestens eine Fotografie (20) annehmbar ist, wenn eine Mindestpunktzahl erfüllt ist.

7. Verfahren zum Bewerten von Installations- oder Reparaturarbeiten, wobei das Verfahren umfasst:
- Aufzeichnen mindestens einer ersten Fotografie (20) durch einen Techniker auf einer mobilen Vorrichtung (12) nach Abschluss eines ersten Arbeitsauftrags (22) für die Installations- oder Reparaturarbeiten:
- Bewerten der mindestens einen ersten Fotografie (20) nach Abschluss des ersten Arbeitsauftrags (22) für eine oder mehrere Farben oder Markierungen, die eine oder mehrere erwartete Komponenten identifizieren, die an dem Arbeitsauftrag (22) beteiligt sind, basierend auf Verarbeitungsanweisungen (18), die die durch die mobile Vorrichtung gespeichert sind;
- Übertragen der mindestens einen ersten Fotografie (20) an einen zentralen Server (14), der konfiguriert ist, um maschinelles Lernen unter Verwendung von Mustererkennung der einen oder mehreren Farben oder Markierungen durchzuführen, die eine oder mehrere erwartete Komponenten identifizieren, die an dem ersten Arbeitsauftrag (22) an der mindestens einen ersten Fotografie (20) beteiligt sind;
- Empfangen von aktualisierten Verarbeitungsanweisungen (18) basierend auf dem maschinellen Lernen, das auf dem zentralen Server (14) durchgeführt wird;
- Aufzeichnen mindestens einer zweiten Fotografie (20) durch den Techniker auf der mobilen Vorrichtung (12) nach Abschluss eines zweiten Arbeitsauftrags (22);
- und Bewerten der mindestens einen zweiten Fotografie (20) basierend auf den aktualisierten Verarbeitungsanweisungen.

8. Verfahren nach Anspruch 7, wobei das Bewerten der mindestens einen ersten Fotografie (20) das Bewerten der mindestens einen ersten Fotografie (20) basierend auf mindestens einer der folgenden Eigenschaften der mindestens einen Fotografie (20) beinhaltet: Helligkeit, Klarheit, Winkel, aus dem die mindestens eine Fotografie (20) aufgenommen wird, und Framing.

9. Verfahren nach Anspruch 7, wobei das Bewerten der mindestens einen ersten Fotografie (20) das Bewerten der mindestens einen ersten Fotografie (20) durch Berechnen einer numerischen Punktzahl für die mindestens eine erste Fotografie (20) beinhaltet.

10. Verfahren nach Anspruch 9, ferner umfassend das Zuweisen mindestens eines Gewichts zu mindestens einer von einer Vielzahl von Kategorien, wenn die numerische Punktzahl berechnet wird, oder ferner umfassend das erneute Aufnehmen der mindestens einen ersten Fotografie (20), wenn die numerische Punktzahl unter einem vorbestimmten Schwellenwert liegt.

11. Verfahren nach Anspruch 7, wobei das Empfangen von aktualisierten Verarbeitungsanweisungen (18) das Empfangen der aktualisierten Verarbeitungsanweisungen (18) als Teil eines Datenpakets (16) umfasst, das den zweiten Arbeitsauftrag (22) umfasst.

12. Mobile Vorrichtung (12) zum Sicherstellen einer ordnungsgemässen Bewertung von Installations- oder Reparaturarbeiten gemäss einem Arbeitsauftrag (22), wobei die mobile Vorrichtung umfasst:
eine Benutzerschnittstelle (30), die konfiguriert ist, um von einem Techniker während des Abschlusses des Arbeitsauftrags (22) betrieben zu werden;
eine Kamera (32), die konfiguriert ist, um mindestens eine erste Fotografie (20) und mindestens eine zweite Fotografie (22) mindestens einer Aufgabe aufzuzeichnen, die durch den Techniker gemäss dem Arbeitsauftrag (22) abgeschlossen wird, wobei die Kamera (32) in betriebsfähiger Kommunikation mit der Benutzerschnittstelle (30) steht;
einen Speicher (38), der konfiguriert ist, um Verarbeitungsanweisungen (18) zum Bewerten von Fotografien (20) zu speichern, die durch die Kamera (32) aufgezeichnet sind; und
einen Prozessor (36), der konfiguriert ist, um die Verarbeitungsanweisungen (18) auszuführen, die auf dem Speicher (38) gespeichert sind, um:
- zu bestimmen, dass die mindestens eine erste Fotografie (20) akzeptabel ist, um die mindestens eine Aufgabe zu dokumentieren, die durch den Techniker gemäss dem Arbeitsauftrag (22) abgeschlossen wird, wobei die mindestens eine erste Fotografie (20) als akzeptabel bestimmt wird, basierend auf der Detektion einer oder mehrerer Farben oder Markierungen, die eine oder mehrere erwartete Komponenten identifizieren, die sich auf die mindestens eine Aufgabe beziehen, nach Abschluss der mindestens einen Aufgabe gemäss dem Arbeitsauftrag (22);
- wenn bestimmt wird, dass die mindestens eine erste Fotografie (22) nicht akzeptabel ist, da die eine oder die mehreren erwarteten Komponenten nicht detektiert werden, die Benutzerschnittstelle (30) zu veranlassen, Anweisungen anzuzeigen, um die mindestens eine zweite Fotografie (20) aufzunehmen und die mindestens eine erste Fotografie (20) aus dem Speicher (38) vor der Übertragung an einen zentralen Server (14) zu löschen; und
- wenn bestimmt wird, dass die mindestens eine zweite Fotografie (20) akzeptabel ist, die Übertragung der mindestens einen zweiten Fotografie (20) an den zentralen Server (14) zu veranlassen.

13. Mobile Vorrichtung nach Anspruch 12, wobei der Prozessor (36) konfiguriert ist, um der mindestens einen Fotografie (20) eine numerische Punktzahl zuzuweisen, um Annehmbarkeit zu bestimmen, wobei der Prozessor (36) bestimmt, dass die mindestens eine Fotografie (20) akzeptabel ist, wenn die numerische Punktzahl über einem vorbestimmten Schwellenwert liegt.

14. Mobile Vorrichtung nach Anspruch 12, wobei der Prozessor (36) konfiguriert ist, um mindestens ein erwartetes Element innerhalb der Fotografie (20) zu detektieren, wobei der Prozessor (36) bestimmt, dass die mindestens eine Fotografie (20) nicht akzeptabel ist, wenn das mindestens eine erwartete Element nicht detektiert wird, oder wobei der Prozessor (36) konfiguriert ist, um den Techniker automatisch anzuweisen, die Kamera (32) zum Aufnehmen einer zusätzlichen Fotografie (20) anzupassen, um sicherzustellen, dass die zusätzliche Fotografie (20) akzeptabel ist, wenn bestimmt wird, dass die mindestens eine anfängliche Fotografie (20) nicht akzeptabel ist, wobei die mindestens eine Fotografie (20) nicht akzeptabel ist, wenn das mindestens eine erwartete Element nicht detektiert wird, und akzeptabel ist, wenn das mindestens eine erwartete Element detektiert wird.

15. Mobile Vorrichtung nach Anspruch 12, wobei der Prozessor (36) konfiguriert ist, um ferner eine Helligkeit der mindestens einen Fotografie (20) zu bestimmen, um Annehmbarkeit zu bestimmen, wobei der Prozessor (36) bestimmt, dass die mindestens eine Fotografie (20) nicht akzeptabel ist, wenn die Helligkeit unter einem vorbestimmten Schwellenwert liegt, oder wobei der Prozessor (36) konfiguriert ist, um eine Klarheit der mindestens einen Fotografie (20) zu bestimmen, um Annehmbarkeit zu bestimmen, wobei der Prozessor (36) bestimmt, dass die mindestens eine Fotografie (20) nicht akzeptabel ist, wenn die Klarheit unter einem vorbestimmten Schwellenwert liegt.

## Revendications

1. Système d'évaluation de travaux d'installation ou de réparation, le
système comprenant :
un dispositif mobile (12) comprenant une caméra (32), un premier processeur (36) et une première mémoire (38), le premier processeur (36) étant configuré pour exécuter des instructions de traitement (18) stockées par la première mémoire (38), les instructions de traitement (18) comprenant un algorithme pour évaluer des photographies (20) enregistrées par la caméra ; et
un serveur central (14) configuré pour communiquer sans fil avec le dispositif mobile (12), le serveur central (14) comprenant un second processeur (46) et une seconde mémoire (48), le second processeur (46) étant configuré pour exécuter des instructions de commande stockées sur la seconde mémoire (48) pour amener le serveur central (14) à :
- recevoir au moins une photographie (20) enregistrée par la caméra (32) du dispositif mobile (12) après l'achèvement d'un premier ordre de travail (22) pour les travaux d'installation ou de réparation et évaluée par le premier processeur (36) du dispositif mobile (12) pour une ou plusieurs couleurs ou marqueurs qui identifient un ou plusieurs composants attendus impliqués dans les travaux d'installation ou de réparation du premier ordre de travail ;
- effectuer un apprentissage automatique en utilisant une reconnaissance de motif des une ou plusieurs couleurs ou marqueurs qui identifient un ou plusieurs composants attendus impliqués dans les travaux d'installation ou de réparation dans l'au moins une photographie (20) pour améliorer l'algorithme utilisé pour évaluer l'au moins une photographie (20) par le premier processeur (36) du dispositif mobile (12) ;
- mettre à jour les instructions de traitement en utilisant l'algorithme amélioré ; et
- transmettre les instructions de traitement mises à jour (18) au dispositif mobile (12) pour permettre l'évaluation d'au moins une photographie ultérieure (20).

2. Système selon la revendication 1, dans lequel les instructions de traitement (18) sont configurées pour amener en outre le premier processeur (36) à évaluer l'au moins une photographie (20) sur la base d'au moins l'une des propriétés suivantes de l'au moins une photographie (20) : la luminosité ; la clarté, l'angle à partir duquel l'au moins une photographie (20) est prise et le cadrage.

3. Système selon la revendication 1, dans lequel les instructions de traitement (18) sont configurées pour amener le premier processeur (36) à évaluer l'au moins une photographie (20) en calculant un score numérique pour l'au moins une photographie (20).

4. Système selon la revendication 1, dans lequel les instructions de traitement (18) sont configurées pour amener le premier processeur (36) à attribuer au moins un poids à au moins l'une d'une pluralité de catégories lors du calcul du score numérique, dans lequel la pluralité de catégories comprend la luminosité, la clarté, l'angle à partir duquel l'au moins une photographie (20) est prise et le cadrage.

5. Système selon la revendication 1, dans lequel le serveur central (14) est configuré pour transmettre les instructions de traitement mises à jour (18) au dispositif mobile (12) en tant que partie d'un paquet de données (16) utilisé pour transmettre un ordre de travail concernant des travaux d'installation ou de réparation ultérieurs.

6. Système selon la revendication 1, dans lequel les instructions de commande sont configurées pour amener le second processeur (46) à évaluer l'au moins une photographie (20) pour l'acceptabilité, et effectuer uniquement un apprentissage automatique en utilisant l'au moins une photographie (20) lorsque l'au moins une photographie (20) est déterminée comme étant acceptable, dans lequel l'au moins une photographie (20) est acceptable si un score minimal est satisfait.

7. Procédé d'évaluation de travaux d'installation ou de réparation, le procédé comprenant :
- l'enregistrement d'au moins une première photographie (20) par un technicien sur un dispositif mobile après l'achèvement d'un premier ordre de travail (22) pour l'installation ou les travaux de réparation ;
- l'évaluation de l'au moins une première photographie (20) après l'achèvement du premier ordre de travail (22) pour une ou plusieurs couleurs ou marqueurs, qui identifient un ou plusieurs composants attendus impliqués dans l'ordre de travail (22) sur la base des instructions de traitement (18) stockées par le dispositif mobile ;
- la transmission de l'au moins une première photographie (20) à un serveur central (14) configuré pour effectuer un apprentissage automatique en utilisant une reconnaissance de motif des une ou plusieurs couleurs ou marqueurs, qui identifient un ou plusieurs composants attendus impliqués dans le premier ordre de travail (22) dans l'au moins une première photographie (20) ;
- la réception d'instructions de traitement mises à jour (18) sur la base de l'apprentissage automatique effectué au niveau du serveur central (14) ;
- l'enregistrement d'au moins une deuxième photographie (20) sur le dispositif mobile (12) par le technicien après l'achèvement d'un deuxième ordre de travail (22) ;
- et l'évaluation de l'au moins une deuxième photographie (20) sur la base des instructions de traitement mises à jour ;

8. Procédé selon la revendication 7, dans lequel l'évaluation de l'au moins une première photographie (20) comprend l'évaluation de l'au moins une première photographie (20) sur la base d'au moins l'une des propriétés suivantes de l'au moins une photographie (20) : la luminosité, la clarté, l'angle à partir duquel l'au moins une photographie (20) est prise et le cadrage.

9. Procédé selon la revendication 7, dans lequel l'évaluation de l'au moins une première photographie (20) comprend l'évaluation de l'au moins une première photographie (20) en calculant un score numérique pour l'au moins une première photographie (20).

10. Procédé selon la revendication 9, comprenant en outre l'attribution d'au moins un poids à au moins l'une d'une pluralité de catégories lors du calcul du score numérique ou comprenant en outre la reprise de l'au moins une première photographie (20) si le score numérique est inférieur à un seuil prédéterminé.

11. Procédé selon la revendication 7, dans lequel la réception d'instructions de traitement mises à jour (18) comprend la réception des instructions de traitement mises à jour (18) en tant que partie d'un paquet de données (16) comprenant le deuxième ordre de travail (22).

12. Dispositif mobile (12) pour assurer une évaluation correcte de travaux d'installation ou de réparation selon un ordre de travail (22), le dispositif mobile comprenant :
une interface utilisateur (30) configurée pour être actionnée par un technicien pendant l'achèvement de l'ordre de travail (22) ;
une caméra (32) configurée pour enregistrer au moins une première photographie (20) et au moins une deuxième photographie (22) d'au moins une tâche accomplie par le technicien conformément à l'ordre de travail (22), la caméra (32) étant en communication fonctionnelle avec l'interface utilisateur (30) ;
une mémoire (38) configurée pour stocker des instructions de traitement (18) pour évaluer des photographies (20) enregistrées par la caméra (32) ; et
un processeur (36) configuré pour exécuter les instructions de traitement (18) stockées sur la mémoire (38) pour :
- déterminer que l'au moins une première photographie (20) est acceptable pour documenter l'au moins une tâche accomplie par le technicien conformément à l'ordre de travail (22), l'au moins une première photographie (20) étant déterminée comme étant acceptable sur la base de la détection d'une ou plusieurs couleurs ou marqueurs qui identifient un ou plusieurs composants attendus liés à l'au moins une tâche après l'achèvement de l'au moins une tâche conformément à l'ordre de travail (22) ;
- lorsque l'au moins une première photographie (22) est déterminée comme n'étant pas acceptable du fait que l'au moins un composant attendu n'est pas détecté, amener l'interface utilisateur (30) à afficher des instructions pour prendre l'au moins une deuxième photographie (20) et supprimer l'au moins une première photographie (20) de la mémoire (38) avant la transmission à un serveur central (14) ; et
- lorsque l'au moins une deuxième photographie (20) est déterminée comme étant acceptable, amener la transmission de l'au moins une deuxième photographie (20) au serveur central (14).

13. Dispositif mobile selon la revendication 12, dans lequel le processeur (36) est configuré pour attribuer un score numérique à l'au moins une photographie (20) pour déterminer l'acceptabilité, le processeur (36) déterminant que l'au moins une photographie (20) est acceptable lorsque le score numérique est supérieur à un seuil prédéterminé.

14. Dispositif mobile selon la revendication 12, dans lequel le processeur (36) est configuré pour détecter au moins un élément attendu dans la photographie (20), le processeur (36) déterminant que l'au moins une photographie (20) est inacceptable lorsque l'au moins un élément attendu n'est pas détecté ou dans lequel le processeur (36) est configuré pour ordonner automatiquement au technicien d'ajuster la caméra (32) pour prendre une photographie supplémentaire (20) pour s'assurer que la photographie supplémentaire (20) est acceptable, lors de la détermination de l'au moins une photographie initiale (20) comme étant inacceptable dans lequel l'au moins une photographie (20) est inacceptable lorsque l'au moins un élément attendu n'est pas détecté et acceptable lorsque l'au moins un élément attendu est détecté.

15. Dispositif mobile selon la revendication 12, dans lequel le processeur (36) est configuré pour déterminer en outre une luminosité de l'au moins une photographie (20) pour déterminer l'acceptabilité, le processeur (36) déterminant que l'au moins une photographie (20) est inacceptable lorsque la luminosité est inférieure à un seuil prédéterminé ou dans lequel le processeur (36) est configuré pour déterminer une clarté de l'au moins une photographie (20) pour déterminer l'acceptabilité, le processeur (36) déterminant que l'au moins une photographie (20) est inacceptable lorsque la clarté est inférieure à un seuil prédéterminé.
